(19) **Europäisches Patentamt European Patent Office Office européen des brevets**

(11) **EP 2 329 175 B1**

(12) **FASCICULE DE BREVET EUROPEEN**

(45) Date de publication et mention
de la délivrance du brevet:
**27.06.2012 Bulletin 2012/26**

(21) Numéro de dépôt: **09802557.0**

(22) Date de dépôt: **27.07.2009**

(51) Int Cl.:
*F16L 11/14* *(2006.01)*     *E21B 17/01* *(2006.01)*

(86) Numéro de dépôt international:
**PCT/FR2009/000932**

(87) Numéro de publication internationale:
**WO 2010/012898 (04.02.2010 Gazette 2010/05)**

(54) **INSTALLATION DE CONDUITE MONTANTE FLEXIBLE DE TRANSPORT D'HYDROCARBURES POUR GRANDE PROFONDEUR**

BIEGSAME STEIGROHRINSTALLATION FÜR DEN TRANSPORT VON KOHLENWASSERSTOFFEN IN GROSSEN TIEFEN

FLEXIBLE RISER INSTALLATION FOR CARRYING HYDROCARBONS USED AT GREAT DEPTHS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **29.07.2008 FR 0804312**

(43) Date de publication de la demande:
**08.06.2011 Bulletin 2011/23**

(73) Titulaire: **Technip France
92400 Courbevoie (FR)**

(72) Inventeurs:
• **MORAND, Henri
6005 WA Perth (AU)**
• **REMERY, Jeroen Hugo
76130 Mont Saint Aignan (FR)**

(74) Mandataire: **Bertrand, Didier et al
S.A. Fedit-Loriot
38 Avenue Hoche
75008 Paris (FR)**

(56) Documents cités:
**EP-A- 0 937 933     WO-A-01/14687
GB-A- 2 145 135     GB-A- 2 346 188**

**Description**

La présente invention se rapporte à une installation de conduite montante flexible de transport d'hydrocarbures ou d'autres fluides sous haute pression, et à un procédé de réalisation d'une telle installation.

Les conduites flexibles de transport des hydrocarbures, qui s'opposent aux conduites rigides, sont déjà bien connues, et elles comportent généralement de l'intérieur vers l'extérieur de la conduite, une carcasse métallique, pour reprendre les efforts radiaux d'écrasement, recouverte d'une gaine d'étanchéité interne en polymère, une voûte de pression pour résister à la pression interne de l'hydrocarbure, des nappes d'armure de traction pour reprendre les efforts de tension axiale et une gaine externe en polymère pour protéger l'ensemble de la conduite et notamment pour empêcher l'eau de mer de pénétrer dans son épaisseur. La carcasse métallique et la voûte de pression (en anglais « pressure vault ») sont constituées d'éléments longitudinaux enroulés à pas court, et elles confèrent à la conduite sa résistance aux efforts radiaux tandis que les nappes d'armure de traction (en anglais « tensile armour layers ») sont constituées de fils généralement métalliques enroulés selon des pas longs de façon à reprendre les efforts axiaux. Il est à noter que dans la présente demande, la notion d'enroulement à pas court désigne tout enroulement hélicoïdal selon un angle d'hélice proche de 90°, typiquement compris entre 75° et 90°. La notion d'enroulement à pas long recouvre quant à elle les angles d'hélice inférieurs à 55°, typiquement compris entre 25° et 55° pour les nappes d'armure de traction.

Ces conduites sont destinées au transport des hydrocarbures notamment dans les fonds marins et ce, à de grandes profondeurs. Plus précisément elles sont dites de type non lié (en anglais «unbonded ») et elles sont ainsi décrites dans les documents normatifs publiés par l'American Petroleum Institute (API), API 17J et API RP 17B.

Lorsqu'une conduite non liée, quelle que soit sa structure, est soumise à une pression externe qui est plus élevée que la pression interne, il se produit dans la paroi de la conduite des efforts de compression orientés parallèlement à l'axe de la conduite et qui tendent à raccourcir la longueur de la conduite. Ce phénomène porte le nom d'effet de fond inverse (« reverse end cap effect » en anglais). L'intensité des efforts de compression axiale est sensiblement proportionnelle à la différence entre la pression externe et la pression interne. Cette intensité peut atteindre un niveau très élevé dans le cas d'une conduite flexible non liée immergée à grande profondeur, du fait que la pression interne peut, dans certaines conditions, être très inférieure à la pression hydrostatique.

Dans le cas d'une conduite flexible de structure classique, par exemple conforme aux documents normatifs de l'API, l'effet de fond inverse a tendance à induire un effort longitudinal de compression dans les fils constituant les nappes d'armure de traction, et à raccourcir la longueur de la conduite flexible. De plus, la conduite flexible est également soumise à des sollicitations dynamiques de flexion notamment lors de l'installation ou en service dans le cas d'une conduite montante (« riser » en langue anglaise), c'est-à-dire d'une conduite faisant le lien entre une installation de surface au niveau de la mer ou à son voisinage, et une installation au fond de la mer. L'ensemble de ces contraintes peut faire flamber les fils des nappes d'armure de traction et désorganiser de façon irréversible les nappes d'armure de traction, provoquant ainsi la ruine de la conduite flexible.

On a donc cherché des améliorations structurelles des conduites flexibles pour augmenter la résistance des nappes d'armure à la compression axiale.

Ainsi, le document WO 03/083343 décrit une telle solution qui consiste à enrouler autour des nappes d'armure de traction des rubans renforcés par exemple de fibres aramides. De cette manière on limite et on contrôle le gonflement des nappes d'armure de traction. Toutefois, si cette solution permet de résoudre les problèmes liés au flambement radial des fils constituant les nappes d'armure de traction, elle permet seulement de limiter le risque de flambement latéral desdits fils qui perdure.

Le document WO 2006/042939 décrit une solution qui consiste à utiliser des fils présentant un fort ratio largeur sur épaisseur et à réduire le nombre total de fils constituant chaque nappe d'armure de traction. Cependant, si cette solution réduit le risque de flambement latéral des nappes d'armure de traction, elle ne le supprime pas totalement.

La demande FR 2 904 993 au nom de la Demanderesse fait connaître une solution consistant à ajouter à l'intérieur de la structure de la conduite flexible une couche tubulaire de blocage axial. Cette couche est conçue pour reprendre les efforts de compression axiale et limiter le raccourcissement de la conduite, ce qui permet d'éviter d'endommager les nappes d'armure de traction.

Ces solutions sont efficaces mais présentent un certain nombre de contraintes, notamment financières, qui conduisent à souhaiter des solutions alternatives, du moins dans des cas spécifiques, et notamment dans le cas particulier des conduites montantes.

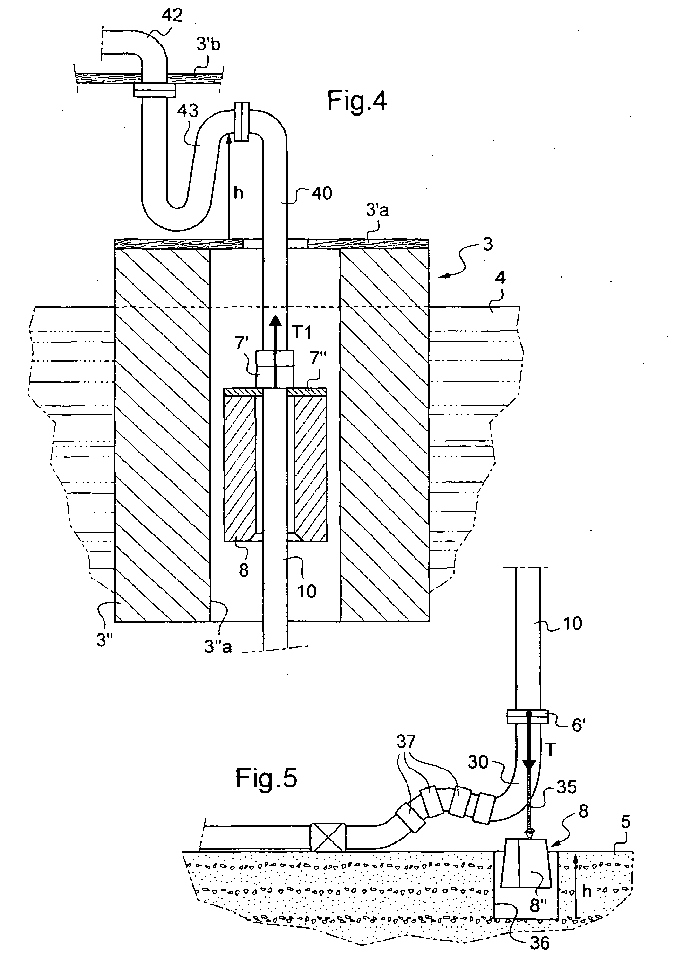

On connaît différentes configurations de conduites flexibles montantes. Les configurations les plus courantes sont représentées à la figure 4 du document normatif « API RP 17B ; Recommended Practice for Flexible Pipes ; Third Edition ; March 2002 ». Elles sont connues de l'homme du métier sous les noms « Free Hanging », « Steep S », « Lazy S », « Steep Wave » et « Lazy Wave ». Une autre configuration, connue sous le nom de « Pliant Wave ®» est décrite dans le brevet US 4 906 137.

Dans les configurations « Steep S », « Lazy S », « Steep Wave », « Lazy Wave » et « Pliant Wave ®», la conduite flexible montante est supportée, à une profondeur intermédiaire entre le fond et la surface, par un ou plusieurs organes à flottabilité positive, de type arche ou bouée sous-marine. Ceci confère à la conduite flexible montante une géométrie en forme de S ou de vague, ce qui lui permet de supporter les mouvements verticaux de l'installation de surface sans générer des courbures excessives de ladite conduite, particulièrement dans la zone située à proximité du fond marin, lesdites courbures excessives étant par ailleurs susceptibles d'endommager ladite conduite. Ces configurations sont généralement réservées aux applications dynamiques à une profondeur inférieure à 500 m.

Dans la configuration « Free Hanging », la conduite flexible montante est disposée en caténaire entre le fond marin et l'installation de surface. Cette configuration présente l'avantage de la simplicité, mais l'inconvénient d'être mal adaptée aux applications dynamiques à faible profondeur, en raison des variations de courbure excessives pouvant être générées à proximité du fond marin. Cependant, cette configuration est couramment utilisée pour les applications à grande profondeur, c'est-à-dire à plus de 1000 m, voire de 1500 m. En effet, dans ces conditions, l'amplitude relative des mouvements du support flottant, et tout particulièrement des mouvements verticaux liés à la houle, reste très inférieure à la longueur de la caténaire, ce qui limite l'amplitude des variations de courbure à proximité du fond marin et permet de maîtriser les risques de fatigue de la conduite. Cependant, pour garantir la résistance de la conduite flexible à l'effet de fond inverse, qui peut à ces grandes profondeurs atteindre un niveau très élevé, la structure de la conduite doit être dimensionnée selon les techniques connues précitées, ce qui conduit à des solutions complexes et coûteuses.

On connaît aussi des colonnes montantes hybrides utilisant à la fois des conduites rigides et des conduites flexibles. Ainsi, les documents FR 2 507 672, FR 2 809 136, FR 2 876 142, GB 2 346 188, WO 00/49267, WO 02/053869, WO 02/063128, WO 02/066786 et WO 02/103153 divulguent une colonne montante de type tour hybride connue de l'homme du métier sous le nom de « Hybrid Riser Tower ». Une ou plusieurs conduites rigides remontent le long d'une tour sensiblement verticale depuis le fond marin jusqu'à une profondeur proche de la surface, profondeur à partir de laquelle une ou plusieurs conduites flexibles assurent la liaison entre le sommet de la tour et le support flottant. La tour est munie de moyens de flottabilité pour rester en position verticale. Ces tours hybrides sont principalement utilisées pour des applications à grande profondeur. Elles présentent l'inconvénient d'être difficiles à installer. En particulier, l'installation en mer du tronçon rigide nécessite généralement des moyens de levage très puissants.

On connaît aussi des colonnes montantes rigides en caténaire, appelées SCR (« Steel Catenary Riser », colonne montante d'acier en caténaire). Ces colonnes formées de tubes métalliques sont plus simples et généralement moins coûteuses que les colonnes flexibles. Cependant elles supportent moins bien les sollicitations dynamiques et sont en pratiques réservées aux supports flottants très stables tels que ceux connus dans le métier sous les noms de SPAR (cf. notamment US 6648074 et US 7377225), les TLP (« Tension Leg Platform ») ou les plateformes semi-submersibles à fort tirant d'eau (« Deep Draft Semi Submersible Platform) comme les EDP (« Extendable Draft Platform », cf. notamment US 6024040 et US 6718901). Ces plateformes de forage et de production, du fait de leur stabilité, permettent de déporter en surface les manifolds (solution dite « dry tree »). Dans le cas de supports flottants de type navire (FPSO « Floating Production Storage and Offloading ») ou plateforme semi-submersible standard, les mouvements induits par la houle et les vagues sont plus importants et on préfère généralement dans ce cas disposer les manifolds sur le fond marin (solution dite « wet tree ») et utiliser une colonne montante comportant au moins un tronçon de conduite flexible dans une des zones sollicitées en flexion dynamiques. Des conduites montantes répondant à ce critère sont typiquement les consuites montantes classiques 100% flexibles (caténaire, Lazy S, Lazy Wave, Steep S, Steep Wave, Pliant Wave®) mais aussi les « Tower Risers » (conduites flexibles reliant le haut de la tour rigide au FPSO) et les conduites hybrides en trois parties flexible-rigide-flexible, comme par celles décrites dans EP 1078144.

Mais jusque-là, on ne connaît pas d'installation de conduite montante réalisée en conduite flexible non liée disposée verticalement entre une installation de surface et un fond marin et qui puisse résister efficacement à l'effet de fond inverse dans les utilisations en mer profonde (c'est-à-dire typiquement à plus de 1000 m, voire 1500 ou 2000 m), sans avoir recours à des modifications structurelles onéreuses de la conduite. À ces grandes profondeurs, l'effet de fond se manifeste avec une amplitude très grande en raison de l'importance de la pression hydrostatique. Lorsque dans une installation de transport d'hydrocarbures, notamment sous forme gazeuse, la production est arrêtée, par exemple en fermant une vanne, la pression intérieure dans la conduite peut chuter et la différence entre la pression hydrostatique extérieure élevée et la pression interne faible ou nulle peut devenir considérable. Ce sont les conditions qui engendrent l'effet de fond inverse. Si l'on veut utiliser une conduite flexible dans une installation de colonne montante classique, on est donc obligé d'adapter la structure de la conduite pour pouvoir résister en pied de colonne à l'effet de fond inverse, ce qui oblige à dimensionner les couches de renfort de la conduite en conséquence, le pied de colonne étant la partie dimensionnante, ce qui conduit à un surdimensionnement du reste de la conduite et donc à un surcoût.

Le document GB 2145135 décrit une installation de colonne montante et un procédé d'installation présentant les caractéristiques du préambule des revendications 1 et 15 annexées. Le document EP 0937933 décrit une conduite flexible pour grande profondeur.

L'invention a pour but de proposer une installation de conduite montante flexible non liée résistant efficacement à l'effet de fond inverse malgré la grande profondeur mais n'exigeant pas des modifications structurelles pénalisantes. L'invention a aussi pour but de proposer un procédé d'installation en mer de cette conduite.

L'invention atteint son but grâce à une installation de colonne montante réalisée avec une conduite flexible de type non lié, ladite conduite comprenant de l'intérieur vers l'extérieur au moins une gaine d'étanchéité interne et au moins deux nappes de fils d'armure de traction enroulées à pas long, la conduite étant disposée entre d'une part une connexion mécanique en tête sur une installation de surface et d'autre part une connexion mécanique en pied avec le fond marin, des connexions fluidiques étant prévues en tête et en pied pour relier la colonne montante d'une part avec des équipements de surface et d'autre part avec des équipements de fond, caractérisée en ce que la conduite flexible est disposée avec le pied de la colonne à au moins 1000 m de profondeur où il subit un effet de fond inverse maximum calculable F et en ce qu'il est prévu des moyens tensionneurs adaptés pour entraîner en pied de la colonne montante une tension de réaction T supérieure à au moins 50% de l'effet de fond inverse maximum calculable F développé en pied de colonne.

On entend par gaine d'étanchéité interne la première couche, en partant de l'intérieur de la conduite, dont la fonction est d'assurer l'étanchéité vis-à-vis du fluide circulant dans la conduite. Généralement, la gaine d'étanchéité interne est un tube en polymère extrudé. Cependant, la présente invention s'applique aussi au cas où ladite gaine d'étanchéité interne est constituée d'un tube métallique flexible et étanche, du type de celui divulgué dans le document WO 98/25063.

Dans la présente demande, l'effet de fond inverse est donné par la formule F = (Pext x Sext) - (Pint x Sint)

Pext est la pression hydrostatique régnant à l'extérieur de la conduite, dans la zone située à proximité du fond marin. Pint est la pression minimale régnant à l'intérieur de la conduite, dans la zone située à proximité du fond marin. C'est la pression interne la plus faible vue par la conduite, pendant toute sa durée de service, dans la zone située à proximité du fond marin. Cette pression minimale est généralement évaluée dès la phase de conception de la conduite, car elle conditionne le dimensionnement de la conduite. Sint est la section transversale interne de la gaine d'étanchéité interne sur laquelle s'applique directement la pression interne. Sext est la section transversale externe de la gaine d'étanchéité sur laquelle s'applique directement la pression externe.

Dans le cas d'une conduite flexible ne comportant qu'une seule gaine étanche, à savoir la gaine d'étanchéité interne, Sext est égal à la section transversale externe de cette gaine. En effet, la pression hydrostatique s'applique dans ce cas directement sur la face externe de la gaine d'étanchéité interne. Des conduites flexibles conformes à cette caractéristique sont notamment décrites dans les documents WO02/31394 et WO2005/04030. De telles conduites peuvent comporter une gaine polymérique externe non étanche qui, du fait de son absence d'étanchéité, n'intervient pas dans le calcul de F.

Généralement, la conduite flexible comporte au moins deux gaines étanches, à savoir d'une part une gaine d'étanchéité interne sur la face interne de laquelle s'applique directement la pression interne, et d'autre part une autre gaine étanche entourant ladite gaine d'étanchéité interne et sur la face externe de laquelle s'applique directement la pression externe.

Fréquemment, cette autre gaine étanche directement soumise à la pression hydrostatique est la couche la plus externe de la conduite flexible, et elle est alors désignée sous le nom de gaine d'étanchéité externe. Dans ce cas, Sext est égal à la section transversale externe de cette gaine d'étanchéité externe.

Cependant, il existe aussi des conduites flexibles, notamment celles à passage lisse (« smooth bore » en anglais), dans lesquelles cette autre gaine étanche directement soumise à la pression hydrostatique est une gaine intermédiaire d'étanchéité généralement située entre la voûte de pression et la nappe interne de fils d'armures de traction. Dans ce cas, Sext est égal à la section transversale externe de cette gaine intermédiaire d'étanchéité directement soumise à la pression hydrostatique.

A titre d'exemple, si on considère une conduite flexible à passage non lisse (« rough bore » en anglais) composée, en partant de l'intérieur vers l'extérieur, d'une carcasse métallique, d'une gaine polymérique d'étanchéité interne de diamètre intérieur Dint, d'une voûte de pression, d'une paire de nappes d'armure de traction et d'une gaine polymérique d'étanchéité externe de diamètre extérieur Dext, l'effet de fond inverse maximum calculable F est donné par la formule :

$$F = (P_{ext} \times \pi D^2_{ext} / 4) - (P_{int} \times \pi D^2_{int} / 4)$$

Grâce à une tension T en pied de colonne largement supérieure à ce que le simple support de la colonne montante flexible justifierait, on compense au moins en partie l'effet de fond inverse et on évite de trop faire travailler les nappes d'armure de traction en compression, ce qui permet de simplifier la structure de la conduite et donc de réduire son coût. De plus, il est ainsi possible d'augmenter les profondeurs d'eau accessibles sans avoir besoin de recourir à des modifications majeures des techniques connues de conception et de fabrication des conduites flexibles. L'invention permet ainsi de s'affranchir de l'emploi d'une couche tubulaire de blocage axial du type de celle décrite dans la demande FR 2 904 993. Elle permet aussi de supprimer ou de réduire l'épaisseur de la ou des couches anti-gonflement, couches décrites en particulier dans le document WO 03/083343, et dont la fonction est de limiter le gonflement des nappes d'armure de traction lorsque ces dernières sont soumises à un effort de compression. Ces couches anti-gonflement sont généralement constituées de bandes renforcées en Kevlar® enroulées autour des nappes d'armure de traction. Du fait du coût élevé du Kevlar®, la réduction ou la suppression de ces bandes permet une économie importante. Un autre avantage de l'invention est de réduire le risque de flambement latéral des armures de traction, et donc d'augmenter la profondeur à laquelle les conduites flexibles peuvent être utilisées en tant que colonne montante. Ceci permet aussi d'éviter l'emploi de fils d'armure de traction présentant un fort ratio largeur sur épaisseur, ce qui facilite la fabrication des conduites.

La présente invention s'applique avantageusement à toute conduite flexible de type non lié, dès lors que celle-ci comprend au moins une gaine d'étanchéité interne et une paire de fils d'armure de traction.

Avantageusement les moyens tensionneurs sont adaptés pour exercer sur la colonne montante une tension T supérieure à au moins 75% de l'effet de fond inverse maximum F développé en pied de colonne, et de manière encore plus avantageuse la bouée est dimensionnée pour exercer sur la colonne montante une tension T supérieure à au moins 100% de l'effet de fond inverse maximum F développé en pied de colonne. Dans ce dernier cas, on est assuré que les armures de traction ne seront jamais mises en compression par l'effet de fond inverse et il est alors particulièrement avantageux de choisir de réaliser la conduite flexible avec des fils d'armure de traction en matériau composite, à base de fibres en carbone par exemple, ou de fibres de verre, ou plus généralement de tout autre matériau composite. De telles nappes d'armure de traction offrent l'avantage de la légèreté mais résistent mal à la compression. L'invention permet de les utiliser pour une colonne montante, moyennant ces précautions de tension élevée imposée par les tensionneurs conformes à l'invention.

Les moyens tensionneurs de l'invention peuvent être intégrés à l'installation de surface et/ou être situés en pied de colonne montante.

Quand ils sont intégrés à l'installation de surface, ils peuvent comprendre des tensionneurs à vérins, notamment à vérin hydraulique. Ils peuvent aussi comprendre un flotteur fixé à l'embout supérieur de la conduite et coulissant dans un guidage à l'intérieur de l'installation de surface.

Quand ils sont prévus en pied de colonne, ils comprennent avantageusement une masse liée à la partie inférieure de la conduite, par exemple au moyen de câble de suspension de masse ou de clamps d'accrochage de lest. La masse peut être répartie sur une certaine longueur de l'extrémité de la conduite ou être localisée en un point, par exemple au niveau de l'embout inférieur. Il peut s'agir d'une masse coulissant dans un puits prévu dans le fond marin.

Naturellement on peut combiner des éléments tensionneurs en pied et des éléments en tête de colonne.

La colonne de l'invention est avantageusement disposée verticalement mais elle peut aussi être suspendue en caténaire et être tendue à l'aide de masses disposées en bas de la conduite.

Une installation conforme à l'invention présente en outre avantageusement une ou plusieurs des caractéristiques suivantes :

-   La gaine d'étanchéité interne de la conduite flexible verticale est polymérique.
-   La conduite flexible verticale comprend une gaine polymérique externe d'étanchéité entourant les nappes de fils d'armure de traction.
-   La pression hydrostatique s'applique directement sur la face externe de la gaine d'étanchéité interne, voire sur la face externe d'une gaine intermédiaire ou d'une gaine externe.
-   La conduite flexible verticale comprend, entre la gaine d'étanchéité interne et les nappes de fils d'armure de traction, une voûte de pression interne réalisée par un enroulement hélicoïdal à pas court de fil, destinée à résister à la pression interne du fluide transporté.
-   Les nappes de fils d'armure de traction de la conduite flexible verticale comprennent des nappes de fils en matériau composite à base de fibres de carbone ou de fibres de verre.
-   La connexion mécanique en pied comporte au moins un câble d'ancrage reliant le bas de la conduite flexible verticale à un point d'ancrage fixé sur le fond marin. Ce câble d'ancrage peut être remplacé par tout moyen de liaison équivalent, présentant à la fois une grande résistance mécanique en tension et une bonne souplesse en flexion, comme par exemple une chaîne ou un dispositif mécanique articulé.
-   La connexion fluidique en pied comporte une conduite flexible de liaison en pied reliant le bas de la colonne montante à une conduite de production, par l'intermédiaire d'embouts et d'accessoires appropriés.
-   La connexion fluidique en pied se fait par un embout inférieur de liaison fixé en bas de la conduite flexible verticale, et le au moins un câble d'ancrage mentionné ci-dessus est solidarisé à son extrémité supérieure audit embout inférieur de liaison.
-   Ladite conduite flexible de liaison en pied est à flottabilité répartie.
-   La connexion fluidique en tête comporte généralement une conduite flexible de liaison en tête reliant le haut de la colonne montante aux équipements de surface, par l'intermédiaire d'embouts et d'accessoires appropriés.
-   L'installation de surface est notamment de type plateforme, semi-submersible, SPAR, FPSO

L'invention concerne également un procédé de mise en place de l'installation conforme à l'invention.

Il s'agit donc d'un procédé de mise en place d'une installation de colonne montante réalisée avec une conduite flexible de type non lié, ladite conduite comprenant de l'intérieur vers l'extérieur au moins une gaine d'étanchéité interne et au moins deux nappes de fils d'armure de traction enroulées à pas long, la conduite devant être disposée entre d'une part une connexion mécanique en tête sur une installation de surface et d'autre part une connexion mécanique en pied avec le fond marin, des connexions fluidiques devant être prévues en tête et en pied pour relier la colonne montante d'une part avec des équipements de surface et d'autre part avec des équipements de fond, le procédé étant caractérisé en ce qu'on dispose le pied de la colonne à au moins 1000 m de profondeur où il subit un effet de fond inverse maximum calculable F et en ce qu'on prévoit des moyens tensionneurs pour entraîner en pied de la colonne montante une tension de réaction T supérieure à au moins 50% de l'effet de fond inverse maximum calculable F développé en pied de colonne.

Avantageusement, on remplit la conduite flexible d'eau pendant la pose.

D'autres particularités et avantages de l'invention ressortiront à la lecture de la description faite ci-après, donnée à titre indicatif mais non limitatif, en référence aux dessins annexés sur lesquels :

- la figure 1 est une vue schématique partielle en perspective d'une conduite flexible utilisable selon l'invention ;
- la figure 2 est une vue schématique en élévation d'une installation de conduite montante conforme à l'invention ;
- la figure 3 est une vue plus de détail d'un premier mode de réalisation des moyens tensionneurs, en tête de conduite ;
- la figure 4 est une vue plus de détail d'un deuxième mode de réalisation des moyens tensionneurs, en tête de conduite;
- la figure 5 est une vue plus de détail d'un troisième mode de réalisation des moyens tensionneurs, en pied de conduite montante ;
- la figure 6 est une vue schématique en élévation d'une conduite flexible suspendue en caténaire et tendue par le bas.

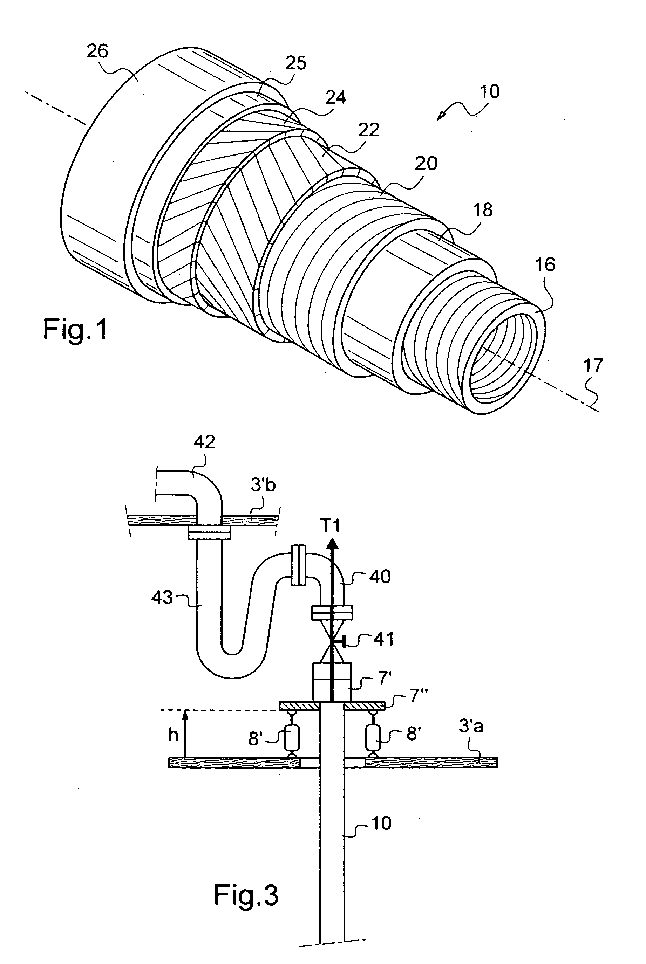

La Figure 1 illustre une conduite flexible non liée 10 du type à passage non lisse (en anglais « rough-bore ») et qui présente ici, de l'intérieur de la conduite vers l'extérieur une carcasse métallique interne 16, une gaine d'étanchéité interne 18 en matière plastique, une voûte de pression agrafée 20, deux nappes croisées d'armure de traction 22, 24, une couche anti-gonflement 25 réalisée par enroulement de bandes à haute résistance mécanique, comme par exemple des bandes tissées en fibres de Kevlar®, et une gaine externe d'étanchéité 26. La conduite flexible 10 s'étend ainsi longitudinalement selon l'axe 17. La carcasse interne métallique 16, la voûte de pression agrafée 20 et la couche anti-gonflement 25 sont réalisées grâce à des éléments longitudinaux enroulés hélicoïdalement à pas court, tandis que les nappes croisées d'armure 22, 24 sont formées d'enroulements hélicoïdaux à pas long de fils d'armure.

Dans un autre type de conduite, à passage lisse (dite « smooth-bore » en anglais), la carcasse métallique 16 est supprimée et une gaine intermédiaire d'étanchéité est généralement ajoutée entre d'une part la voûte de pression 20 et d'autre part la nappe interne d'armure 22. On peut également noter que certaines conduites flexibles ne comportent pas de voûte de pression mais acquièrent leur résistance à la pression par un enroulement d'armures particulier, sous un angle favorable, par exemple à 55°.

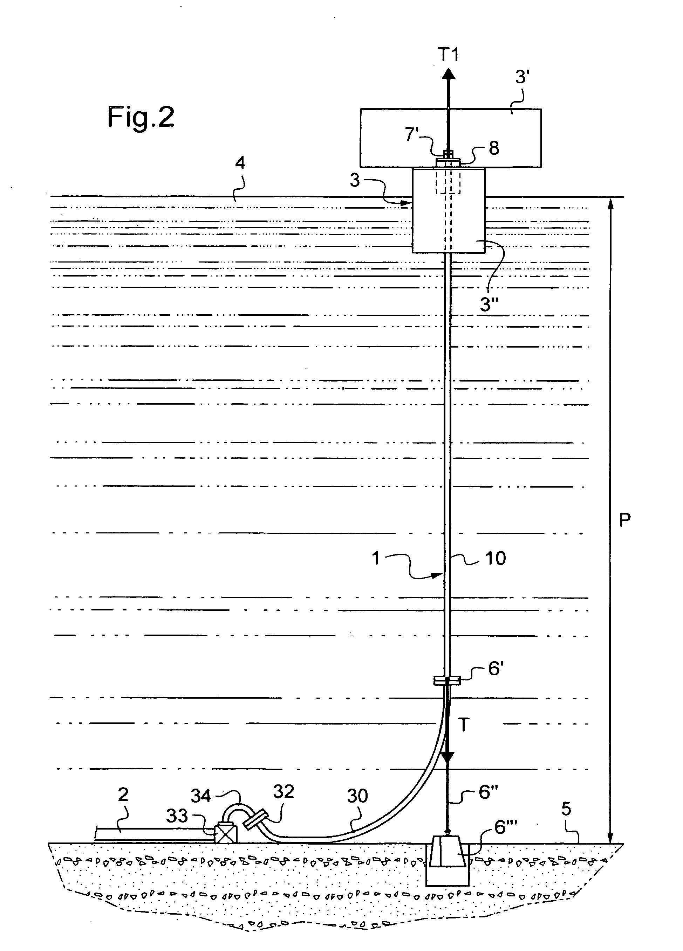

La figure 2 représente schématiquement la colonne montante 1 de l'invention destinée à faire remonter un fluide, en principe un hydrocarbure liquide ou gazeux, ou biphasique, entre une installation de production 2 située sur le fond marin 5 et une installation d'exploitation 3 flottant à la surface 4 de la mer, par exemple du type SPAR comprenant une plateforme proprement dite 3' à plusieurs planchers, portée sur un flotteur 3". L'installation de production 2 représentée sur la figure 2 est une conduite, généralement rigide, reposant sur le fond marin et connue de l'homme du métier sous le nom de « flowline ». Cette conduite assure la liaison entre d'une part le pied de la colonne montante 1, et d'autre part une installation sous-marine du type par exemple collecteur (« manifold » en anglais) ou tête de puits.

La colonne montante se compose essentiellement d'une portion de conduite flexible verticale 10 tendue entre une connexion mécanique 6', 6", 6''' d'accrochage au fond marin 5 en pied de colonne et une connexion mécanique 7', 7" d'accrochage à des moyens tensionneurs 8 ici en tête de colonne (configuration dite « topside »), représentés schématiquement sur la figure 2 et plus en détail sur la figure 3. Les moyens d'accrochage 7', 7" ont pour fonction de transmettre à la partie supérieure de la conduite flexible les forces de traction générées par les moyens tensionneurs 8. Les moyens d'accrochage mécanique 6', 6", 6''' ont pour fonction d'ancrer la base de la conduite flexible 10 au fond marin 5.

Dans une installation typique envisagée par la Demanderesse, la profondeur P de la mer est supérieure à 1000 m et peut atteindre par exemple 3000 m. Les moyens tensionneurs 8 exercent en tête de colonne sur celle-ci une tension T1 dirigée vers le haut. Compte tenu du poids apparent de la conduite sous l'eau, la force de réaction T s'exerçant en pied de colonne au niveau de la fixation 6' a comme intensité la différence entre la tension T1 en tête et le poids apparent relatif de la colonne.

Selon la présente invention, les moyens tensionneurs 8 sont adaptés de telle façon que la tension T résultante appliquée à la partie inférieure de la conduite flexible montante soit suffisamment importante pour compenser au moins 50%, avantageusement 75% et préférentiellement 100% de l'effort de compression axiale généré par l'effet de fond inverse.

Selon l'invention, la tension imposée sur la colonne peut dépasser 70 000 daN, voire 100 000 daN ou même 200 000 daN, ce qui est une valeur très importante. Certes, cela exige de mettre en oeuvre des moyens tensionneurs qui imposent un surcoût à l'installation, mais grâce à eux, on obtient, un gain plus important sur la structure de la conduite flexible verticale 10, cet avantage venant largement compenser l'inconvénient lié au surcoût des moyens tensionneurs.

L'exemple suivant illustre ce point. Considérons une conduite flexible verticale 10 de transport de gaz, de diamètre intérieur 225 mm et de diamètre extérieur 335 mm, et s'étendant entre le fond marin situé à une profondeur $P = 2000$ m et l'installation de surface. Supposons par ailleurs qu'en cas d'arrêt de production, la pression à l'intérieur de la conduite puisse chuter à 1 bar, dans la zone située à proximité du fond marin, cette pression interne étant par ailleurs la pression minimale prévue pendant la durée de vie et de fonctionnement de la conduite. La pression hydrostatique en pied de conduite est sensiblement égale à 200 bar. Par conséquent, dans cet exemple :

$P_{ext}$ = 200 bar = 2 daN/mm$^2$
$P_{int}$ = 1bar = 0, 01 daN/mm$^2$
$D_{ext}$ = 335 mm
$D_{int}$ = 225 mm

Si bien que l'effet de fond inverse maximum est :

$$F = (2 \times \pi \times 335^2/4) - (0,01 \times \pi \times 225^2/4) \approx 176\ 000 \text{ daN}$$

Si l'on n'appliquait pas l'invention, il faudrait donc dimensionner la conduite pour résister à un effet de fond inverse de l'ordre de 180 000 daN pour tenir compte des marges de sécurité. En pratique, dans cet exemple, ceci aurait conduit à choisir une structure comportant deux nappes d'armure de traction 22, 24 en acier de 4 mm d'épaisseur chacune, ainsi qu'une couche anti-gonflement 25 en Kevlar® de forte épaisseur. Les fils en acier constituant les nappes d'armure de traction auraient de plus présenté un fort ratio largeur sur épaisseur, typiquement 20 mm par 4 mm, pour éviter le flambement latéral des nappes d'armure de traction. Le poids dans l'eau d'une telle conduite, lorsqu'elle est pleine de gaz, aurait alors été de l'ordre de 100 daN par mètre linéaire, ce qui aurait conduit à un poids total de 200 000 daN.

Selon un premier mode de réalisation de l'invention, la tension T en pied de colonne est égale à 50% de F, c'est-à-dire à 88 000 daN. La conduite flexible 10 doit dans ce cas être dimensionnée pour résister à un effort de compression axiale de l'ordre de 90 000 daN au lieu des 180 000 daN précités selon l'art antérieur. Cette forte diminution de la compression axiale permet dans cet exemple de choisir une structure comportant deux nappes d'armure de traction 22, 24 en acier de 3 mm d'épaisseur chacune, et constituées de fils classiques ne présentant pas un fort ratio largeur sur épaisseur. L'épaisseur de la couche anti-gonflement 25 en Kevlar® est dans ce cas quasiment deux fois plus faible que celle selon l'art antérieur précité. Le poids dans l'eau d'une telle conduite, lorsqu'elle est pleine de gaz, est de l'ordre de 90 daN par mètre linéaire, c'est-à-dire sensiblement inférieur à celui d'une conduite selon l'art antérieur précité. Le poids total dans l'eau de la conduite 10 avoisine donc 180 000 daN.

Selon un deuxième mode de réalisation particulièrement avantageux de l'invention, la tension T en pied de colonne est égale à F, c'est-à-dire à 176 000 daN.

Dans ce cas, dans la mesure où l'effet de fond inverse F est totalement compensé et où on évite de mettre les nappes d'armure de traction 22, 24 en compression, il est possible et avantageux de choisir pour celles-ci des fils en matériau composite, préférentiellement à base de fibres de carbone. On pourra se référer par exemple au document US 6 620 471 au nom de Demanderesse, faisant connaître des rubans composites comportant des fibres composites noyées dans une matrice thermoplastique. De telles armures apportent une grande résistance à la traction et conduisent à une conduite flexible plus légère que des armures métalliques. En revanche, comme elles résistent mal à la compression, on ne peut les employer que dans des conditions où le risque de mise en compression est conjuré, ce qui est le cas avec l'invention qui permet de toujours maintenir les armures en traction.

L'emploi d'armures de traction en fibres de carbone en lieu et place d'armures en acier permet non seulement d'alléger la conduite, ce qui facilite sa manutention et son installation en mer, mais aussi d'améliorer sa résistance à la corrosion et d'éviter les phénomènes de fragilisation par l'hydrogène rencontrés avec les aciers à hautes caractéristiques mécaniques. Selon d'autres modes de réalisation, on pourra utiliser des armures en matériau composite à base de fibres de verre. L'absence de compression axiale permet aussi de supprimer la couche anti-gonflement 25 en Kevlar®, ce qui permet une économie importante. Le poids dans l'eau d'une telle conduite, lors qu'elle est pleine de gaz, est dans cet exemple de l'ordre de 60 daN par mètre linéaire, ce qui représente un gain de poids de 40 % par rapport à l'art antérieur précité. Le poids total dans l'eau de la conduite 10 avoisine donc 120 000 daN.

On décrira maintenant plus en détail la réalisation de certains des équipements de l'installation conforme à l'invention.

On voit sur la figure 2 des moyens de raccordement en pied qui assurent la continuité de l'écoulement du fluide transporté entre d'une part l'installation sous-marine de production 2 et d'autre part la partie inférieure de la conduite flexible verticale 10 au niveau de l'embout 6'. Ces moyens comportent une conduite 30 de liaison en pied, généralement de courte longueur, en pratique moins de 100m. Cette conduite de liaison en pied doit être dimensionnée pour résister à la totalité l'effet de fond inverse. Cette conduite de liaison en pied peut comporter un ou plusieurs tronçons de conduite rigide ou flexible éventuellement combinés entre eux. Elle peut aussi comporter un dispositif mécanique de type joint flexible, dispositif dont la fonction est d'assurer la continuité de l'écoulement tout en autorisant des degrés de liberté en flexion similaires à ceux d'une conduite flexible. On peut aussi avoir d'autres types de connexions verticales, par exemple à simple bride et limiteur de courbure pour reprendre les variations d'angle.

Avantageusement la conduite 30 de liaison en pied est une conduite flexible renforcée selon les techniques précitées de l'art antérieur, afin de résister à l'effet de fond inverse et de supprimer le risque de flambement latéral des nappes d'armure de traction. La structure de cette conduite flexible 30 de liaison en pied est généralement très différente de celle de la conduite flexible verticale 10. Sur la figure 2 , la conduite flexible 30 est raccordée à son extrémité inférieure par un embout 32 à l'embout 35 d'une manchette rigide 34 permettant un raccordement par le haut avec un connecteur vertical 33 placé à l'extrémité de la conduite de production (« flowline ») 2 et coopérant avec un embout adapté 36 de la manchette 34. L'extrémité supérieure du flexible 30 comporte un embout 31 raccordé à l'embout inférieur 6' de la conduite flexible 10, lequel est fixé à un point d'ancrage 6''' par un câble ou une chaîne 6". Le point d'ancrage 6''' est solidaire du fond marin 5. Il est dimensionné pour résister à une tension d'arrachement supérieure à la tension T exercée par le pied de la colonne. Le point d'ancrage 6''' est avantageusement une ancre à succion (« succion pile » en anglais) ou une pile d'ancrage par gravité.

La figure 3 montre l'extrémité verticale haute du flexible 10 munie d'un embout 7' qui repose sur une bague d'arrêt 7" portée sur des vérins hydraulique 8' (constituant les moyens tensionneurs 8) montés verticalement sur un plancher 3'a de la plateforme 3' et permettant de faire varier la hauteur h de l'embout 7' par rapport au plancher 3'a. L'embout 7' peut être connecté, au travers d'une vanne 41, à un coude rigide 40, lui-même relié par un raccord 43 à une tubulure 42 disposée sur un plancher 3'b de la plateforme (il peut s'agir du même plancher que 3'a ou d'un autre plancher). Le raccord 43 est un raccord court flexible (du type nommé « jumper » dans la profession) pour accommoder les variations de hauteur h.

La figure 4 représente le détail d'un second mode de réalisation des moyens tensionneurs en tête de colonne. L'embout 7' du flexible 10 repose sur une bague annulaire 7" portée par une bouée annulaire 8 traversée par le flexible 10 et guidée dans un puits central 3"a du flotteur 3" de la SPAR 3. La bouée 8 est immergée, mais à la différence d'installations utilisant des bouées isolées immergées à des profondeurs de 200 à 300 m sous la surface 4 de l'eau, afin d'éviter les courants marins, il s'agit ici d'une bouée guidée par l'installation de surface 3 et donc située à une faible distance de celle-ci mais insensible néanmoins aux courants marins dans la mesure où elle est protégée par le puits central 3"a. Comme dans le mode de réalisation précédent, la partie supérieure de la conduite 10 est reliée à une conduite rigide 40 qui traverse le plancher inférieur 3'a de la plateforme et conduit, par l'intermédiaire d'un raccord flexible 43 reprenant les variations de hauteur h, à une tubulure 42 reliée au manifold. La bouée 8 est dimensionnée pour d'une part reprendre le poids de la conduite immergée et d'autre part exercer sur la conduite 10 la tension nécessaire pour annuler en partie ou totalement l'effet de fond inverse T sur le pied de la colonne. La flottabilité nécessaire de la bouée 8 pour exercer cette tension reste raisonnable dans la mesure où la mesure préconisée par l'invention permet de diminuer le poids de la conduite.

La figure 5 montre un autre mode de réalisation dans lequel on prévoit des moyens tensionneurs 8 en bas de colonne. L'embout 6' en bas de colonne est rendu solidaire par des câbles d'une masse 8 coulissant verticalement dans un trou 36 formé dans le fond marin 5 et tubé. La formation du trou 36 est facilitée si la plateforme 3 est une plateforme de forage. La masse 8 impose une traction permanente T en pied de colonne et celle-ci, conformément à l'invention, est choisie pour reprendre au moins la moitié de l'effet de fond inverse. Afin d'accommoder les variations de la hauteur h de la masse, le premier raccord 30 est flexible et comprend éventuellement des flotteurs 37.

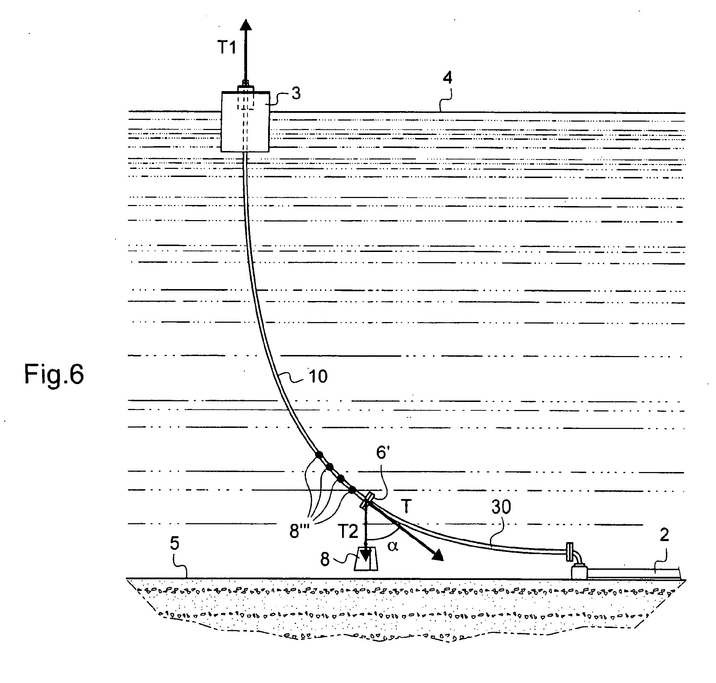

La figure 6 montre une variante de l'invention dans laquelle la conduite montante flexible 10 n'est pas tendue en position verticale mais en caténaire. Elle s'étend entre l'installation de surface 3 au niveau 4 de la mer et un raccord flexible 30 résistant à la compression et relié à la flowline 2 du fond marin 5. L'embout inférieur 6' de la conduite, qui est situé au-dessus du fond marin 5, à une certaine distance, supporte une masse 8 qui impose une force T2 dirigée verticalement vers le bas sur cet embout, qui correspond à une force T ramenée sur la tangente à l'axe de la conduite à son extrémité d'une valeur de T2/cosα, si α désigne l'angle formé par le bas de la conduite avec la verticale. Selon l'invention on choisit la masse 8 pour que T reprenne au moins 50% de l'effet de fond inverse calculable pouvant s'appliquer sur l'extrémité inférieure de la conduite 10. La masse 8 peut être divisée en plusieurs masses. Au lieu d'être suspendue, elle peut être accrochée par des clamps de lest sur la conduite, représentés en 8''.

En ce qui concerne la mise en place de la conduite de l'invention, il est avantageux de poser la conduite flexible pleine d'eau, soit totalement, soit partiellement, de façon à limiter l'effet de fond inverse pendant l'opération de pose, tant que la tension T n'a pas été appliquée. En effet, la colonne d'eau à l'intérieur de la conduite flexible génère une pression interne qui s'oppose à la pression hydrostatique externe, et réduit l'effet de fond inverse. Il est ainsi possible, en ajustant le niveau d'eau à l'intérieur de la conduite flexible, de réduire et de contrôler en permanence les contraintes axiales de compression supportées par la conduite flexible pendant l'opération de pose, de façon à éviter d'endommager ladite conduite. Une fois la tension T appliquée, la colonne montante peut être vidée par pompage de l'eau ayant servi lors des phases préalables d'installation, sans risque d'endommager la conduite flexible verticale. On ne sortirait pas du cadre de la présente invention en remplaçant l'eau par un autre fluide, tel par exemple qu'un hydrocarbure du type gazole. Cette solution serait particulièrement adaptée à la pose de conduites flexibles de transport de gaz, car la présence d'eau ou d'humidité à l'intérieur de ces conduites est susceptible de provoquer ultérieurement la formation de bouchons d'hydrates.

**Revendications**

1. Installation de colonne montante réalisée avec une conduite flexible (10) de type non lié, ladite conduite (10) comprenant de l'intérieur vers l'extérieur au moins une gaine d'étanchéité interne (18) et au moins deux nappes (22, 24) de fils d'armure de traction enroulées à pas long, la conduite (10) étant disposée entre d'une part une connexion mécanique en tête (7') sur une installation de surface (3) et d'autre part une connexion mécanique en pied (6') avec le fond marin (5), des connexions fluidiques (40, 30) étant prévues en tête et en pied pour relier la colonne montante (10) d'une part avec des équipements de surface (42) et d'autre part avec des équipements de fond (2), **caractérisée en ce que** la conduite flexible (10) est disposée avec le pied de la colonne à au moins 1000 m de profondeur où il subit un effet de fond inverse maximum calculable F et **en ce qu'**il est prévu des moyens tensionneurs (8) adaptés pour entraîner en pied de la colonne montante une tension de réaction T supérieure à au moins 50% de l'effet de fond inverse maximum calculable F développé en pied de colonne.

2. Installation selon la revendication 1, **caractérisée en ce que** les moyens tensionneurs (8) sont adaptés pour exercer sur la colonne montante (10) une tension T supérieure à au moins 75% de l'effet de fond inverse maximum F développé en pied de colonne.

3. Installation selon la revendication 1, **caractérisée en ce que** les moyens tensionneurs (8) sont adaptés pour exercer sur la colonne montante (10) une tension T supérieure à au moins 100% de l'effet de fond inverse maximum F développé en pied de colonne.

4. Installation selon l'une quelconque des revendications 1 à 3, **caractérisée en ce que** les moyens tensionneurs (8) sont intégrés à l'installation de surface.

5. Installation selon la revendication 4, **caractérisée en ce que** les moyens tensionneurs (8) comprennent des moyens tensionneurs hydrauliques (8').

6. Installation selon la revendication 4, **caractérisée en ce que** les moyens tensionneurs (8) comprennent un flotteur fixé à l'embout supérieur de la conduite (10) et coulissant dans un guidage (3"a) à l'intérieur de l'installation de surface (3).

7. Installation selon l'une quelconque des revendications 1 à 3, **caractérisée en ce que** les moyens tensionneurs (8) sont situés en pied de colonne montante.

8. Installation selon la revendication 7, **caractérisée en ce que** les moyens tensionneurs (8) comprennent une masse liée à la partie inférieure de la conduite.

9. Installation selon la revendication 8 **caractérisée en ce que** la masse coulisse dans un trou (36) prévu dans le fond marin (5).

10. Installation selon la revendication 8, **caractérisée en ce que** la masse est répartie sur l'extrémité de la conduite.

11. Installation selon l'une quelconque des revendications 1 à 10, **caractérisée en ce que** la colonne (10) de l'invention est disposée verticalement.

12. Installation selon l'une quelconque des revendications 1 à 10, **caractérisée en ce que** la colonne (10) de l'invention est suspendue en caténaire et tendue à l'aide de masses disposées en bas de la conduite.

13. Installation selon l'une quelconque des revendications 1 à 12, **caractérisée en ce que** la conduite comporte des armures de traction réalisées en matériau composite à base de fibres de carbone.

14. Installation selon l'une quelconque des revendications 1 à 12, **caractérisée en ce que** la conduite comporte des armures de traction réalisées en matériau composite à base de fibres de verre.

15. Procédé de mise en place d'une installation de colonne montante réalisée avec une conduite flexible (10) de type non lié, ladite conduite comprenant de l'intérieur vers l'extérieur au moins une gaine d'étanchéité interne (18) et au moins deux nappes (22, 24) de fils d'armure de traction enroulées à pas long, la conduite (10) devant être disposée entre d'une part une connexion mécanique (7') en tête sur une installation de surface (3) et d'autre part une connexion mécanique (6') en pied avec le fond marin (5), des connexions fluidiques devant être prévues en tête et en pied pour relier la colonne montante (10) d'une part avec des équipements de surface (42) et d'autre part avec des équipements de fond (2), le procédé étant **caractérisé en ce qu'**on dispose le pied de la colonne (10) à au moins 1000 m de profondeur où il subit un effet de fond inverse maximum calculable F et **en ce qu'**on prévoit des moyens tensionneurs (8) pour entraîner en pied de la colonne montante (10) une tension de réaction T supérieure à au moins 50% de l'effet de fond inverse maximum calculable F développé en pied de colonne.

16. Procédé selon la revendication 15, **caractérisé en ce qu'**on remplit la conduite flexible (10) d'eau pendant la pose.

**Claims**

1. A riser installation produced using a flexible pipe (10) of the unbonded type, said pipe (10) comprising, from inside to outside, at least one internal sealing sheath (18) and at least two layers (22, 24) of tensile armor wires wound with a long pitch, the pipe (10) being positioned between, on the one hand, a mechanical connection (7') at the top to a surface installation (3) and, on the other hand, a mechanical connection (6') at the bottom with the seabed (5), fluidic connections (40, 30) being provided at the top and at the bottom to connect the riser (10) on the one hand to surface equipment (42) and on the other hand to seabed equipment (2), **characterized in that** the flexible pipe (10) is positioned with the bottom of the riser at a depth of at least 1000 m where it is subject to a maximum calculable reverse end-cap effect F and **in that** tensioning means (8) are provided, designed to produce, at the bottom of the riser, a reactive tension T greater than at least 50% of the maximum calculable reverse end-cap effect F developed at the bottom of the riser.

2. The installation as claimed in claim 1, **characterized in that** the tensioning means (8) are designed to exert on the riser (10) a tension T greater than at least 75% of the maximum reverse end-cap effect F developed at the bottom of the riser.

3. The installation as claimed in claim 1, **characterized in that** the tensioning means (8) are designed to exert on the riser (10) a tension T greater than at least 100% of the maximum reverse end-cap effect F developed at the bottom of the riser.

4. The installation as claimed in any one of claims 1 to 3, **characterized in that** the tensioning means (8) are incorporated in the surface installation.

5. The installation as claimed in claim 4, **characterized in that** the tensioning means (8) comprise hydraulic tensioning means (8').

6. The installation as claimed in claim 4, **characterized in that** the tensioning means (8) comprise a float fixed to the top nozzle of the pipe (10) and that slides in a guide (3"a) inside the surface installation.

7. The installation as claimed in any one of claims 1 to 3, **characterized in that** the tensioning means (8) are situated at the bottom of the riser.

8. The installation as claimed in claim 7, **characterized in that** the tensioning means (8) comprise a weight connected to the bottom portion of the pipe.

9. The installation as claimed in claim 8, **characterized in that** the weight slides in a hole (36) provided in the seabed (5).

10. The installation as claimed in claim 8, **characterized in that** the weight is distributed over the end of the pipe.

**11.** The installation as claimed in any one of claims 1 to 10, **characterized in that** the inventive riser (10) is positioned vertically.

**12.** The installation as claimed in any one of claims 1 to 10, **characterized in that** the inventive riser (10) is suspended in catenary fashion and held taut using weights positioned at the bottom of the pipe.

**13.** The installation as claimed in any one of claims 1 to 12, **characterized in that** the pipe comprises tensile armor made of a composite, carbon fiber-based material.

**14.** The installation as claimed in any one of claims 1 to 12, **characterized in that** the pipe comprises tensile armors made of a composite, glass-fiber-based material.

**15.** A method of installing a riser installation produced using a flexible pipe (10) of the unbonded type, said pipe comprising, from inside to outside, at least one internal sealing sheath (18) and at least two layers (22, 24) of tensile armor wires wound with a long pitch, the pipe (10) having to be positioned between on the one hand a mechanical connection (7') at the top to a surface installation (3) and on the other hand a mechanical connection (6') at the bottom with the seabed (5), fluidic connections having to be provided at the top and at the bottom to connect to the riser (10) on the one hand to surface equipment (42) and on the other hand to seabed equipment (2), the method being **characterized in that** the bottom of the riser (10) is positioned at a depth of at least 1000 m where it is subject to a maximum calculable reverse end-cap effect F and **in that** tensioning means (8) are provided to produce, at the bottom of the riser (10), a reactive tension T greater than at least 50% of the maximum calculable reverse end-cap effect F developed at the bottom of the riser.

**16.** The method as claimed in claim 15, **characterized in that** the flexible pipe (10) is filled with water while being laid.

**Patentansprüche**

**1.** Steigrohrinstallation, realisiert mit einer flexiblen Rohrleitung (10) vom unverbundenen Typ (10), wobei die Rohrleitung (10) von innen nach außen zumindest einen inneren Dichtungsmantel (18) und zumindest zwei Zugbewehrungsschichten (22, 24) umfasst, die mit großer Gangart gewickelt sind, wobei die Rohrleitung (10) zwischen einerseits einer mechanischen kopfseitigen Verbindung (7') an einer Oberflächeneinrichtung (3) und andererseits einer mechanischen fußseitigen Verbindung (6') mit dem Meeresboden (5) angeordnet ist, wobei fluidische Verbindungen (40, 30) am Kopf und am Fuß vorgesehen sind, um die Steigrohrleitung (10) einerseits mit Oberflächengerätschaften (42) und andererseits mit Bodengerätschaften (2) zu verbinden, **dadurch gekennzeichnet, dass** die flexible Rohrleitung (10) mit dem Fuß der Steigrohrleitung in mindestens 1.000 m Tiefe angeordnet ist, wo er einem berechenbaren maximalen umgekehrten Bodeneffekt F ausgesetzt ist, und dass Spannmittel (8) vorgesehen sind, die dazu geeignet sind, am Fuß der Steigrohrleitung eine Reaktionsspannung T zu bewirken, die größer als mindestens 50 % des berechenbaren maximalen umgekehrten Bodeneffekts F ist, der sich am Fuß der Steigrohrleitung entwickelt.

**2.** Installation nach Anspruch 1, **dadurch gekennzeichnet, dass** die Spannmittel (8) dazu geeignet sind, auf die Steigrohrleitung (10) eine Spannung T auszuüben, die größer als mindestens 75% des maximalen umgekehrten Bodeneffekts F ist, der sich am Fuß der Steigrohrleitung entwickelt.

**3.** Installation nach Anspruch 1, **dadurch gekennzeichnet, dass** die Spannmittel (8) dazu geeignet sind, auf die Steigrohrleitung (10) eine Spannung T auszuüben, die größer als mindestens 100% des maximalen umgekehrten Bodeneffekts F ist, der sich am Fuß der Steigrohrleitung entwickelt.

**4.** Installation nach einem der Ansprüche 1 bis 3, **dadurch gekennzeichnet, dass** die Spannmittel (8) in die Oberflächeninstallation integriert sind.

**5.** Installation nach Anspruch 4, **dadurch gekennzeichnet, dass** die Spannmittel (8) hydraulische Spannmittel (8') umfassen.

**6.** Installation nach Anspruch 4, **dadurch gekennzeichnet, dass** die Spannmittel (8) einen Schwimmer umfassen, der an dem oberen Stutzen der Rohrleitung (10) befestigt ist und in einer Führung (3"a) im Innern der Oberflächeninstallation (3) gleitet.

7. Installation nach einem der Ansprüche 1 bis 3, **dadurch gekennzeichnet, dass** die Spannmittel (8) am Fuß der Steigrohrleitung angeordnet sind.

8. Installation nach Anspruch 7, **dadurch gekennzeichnet, dass** die Spannmittel (8) eine Masse umfassen, die mit dem unteren Teil der Rohrleitung verbunden ist.

9. Installation nach Anspruch 8, **dadurch gekennzeichnet, dass** die Masse in einem Loch (36), das in dem Meeresboden (5) vorgesehen ist, gleitet.

10. Installation nach Anspruch 8, **dadurch gekennzeichnet, dass** die Masse über das Ende der Rohrleitung verteilt ist.

11. Installation nach einem der Ansprüche 1 bis 10, **dadurch gekennzeichnet, dass** die Steigrohrleitung (10) der Erfindung vertikal angeordnet ist.

12. Installation nach einem der Ansprüche 1 bis 10, **dadurch gekennzeichnet, dass** die Steigrohrleitung (10) der Erfindung in Seillinie hängt und mit Hilfe von Massen, die unten an der Rohrleitung angeordnet sind, gespannt ist.

13. Installation nach einem der Ansprüche 1 bis 12, **dadurch gekennzeichnet, dass** die Rohrleitung Zugbewehrungen aufweist, die aus einem Verbundmaterial auf Carbonfaser-Basis hergestellt sind. 23

14. Installation nach einem der Ansprüche 1 bis 12, **dadurch gekennzeichnet, dass** die Rohrleitung Zugbewehrungen aufweist, die aus einem Verbundmaterial auf Glasfaser-Basis hergestellt sind.

15. Verfahren zum Anbringen einer Steigrohrinstallation, die mit einer flexiblen Rohrleitung (10) vom unverbundenen Typ (10) realisiert ist, wobei die Rohrleitung von innen nach außen zumindest einen inneren Dichtungsmantel (18) und zumindest zwei Zugbewehrungsschichten (22, 24) umfasst, die mit großer Gangart gewickelt sind, wobei die Rohrleitung (10) zwischen einerseits einer mechanischen kopfseitigen Verbindung (7') an einer Oberflächeneinrichtung (3) und andererseits einer mechanischen fußseitigen Verbindung (6') mit dem Meeresboden (5) angeordnet sein muss, wobei fluidische Verbindungen am Kopf und am Fuß vorgesehen sein müssen, um die Steigrohrleitung (10) einerseits mit Oberflächengerätschaften (42) und andererseits mit Bodengerätschaften (2) zu verbinden, wobei das Verfahren **dadurch gekennzeichnet ist, dass** der Fuß der Steigrohrleitung (10) in mindestens 1.000 m Tiefe angeordnet wird, wo er einem berechenbaren maximalen umgekehrten Bodeneffekt F ausgesetzt ist, und dass Spannmittel (8) vorgesehen werden, um am Fuß der Steigrohrleitung (10) eine Reaktionsspannung T zu bewirken, die größer als mindestens 50 % des berechenbaren maximalen umgekehrten Bodeneffekts F ist, der sich am Fuß der Steigrohrleitung entwickelt.

16. Verfahren nach Anspruch 15, **dadurch gekennzeichnet, dass** die flexible Rohrleitung (10) während der Verlegung mit Wasser befüllt wird.

Fig.1

Fig.3

Fig.2

Fig.4

Fig.5

Fig.6

**RÉFÉRENCES CITÉES DANS LA DESCRIPTION**

**Documents brevets cités dans la description**

- WO 03083343 A
- WO 2006042939 A
- FR 2904993
- US 4906137 A
- FR 2507672
- FR 2809136
- FR 2876142
- GB 2346188 A
- WO 0049267 A
- WO 02053869 A
- WO 02063128 A
- WO 02066786 A

- WO 02103153 A
- US 6648074 B
- US 7377225 B
- US 6024040 A
- US 6718901 B
- EP 1078144 A
- GB 2145135 A
- EP 0937933 A
- WO 9825063 A
- WO 0231394 A
- WO 200504030 A
- US 6620471 B

**Littérature non-brevet citée dans la description**

- API RP 17B ; Recommended Practice for Flexible Pipes. Mars 2002